(19) Europäisches Patentamt / European Patent Office / Office européen des brevets

(11) **EP 4 134 148 A1**

(12) **EUROPEAN PATENT APPLICATION**
published in accordance with Art. 153(4) EPC

(43) Date of publication:
**15.02.2023 Bulletin 2023/07**

(21) Application number: **21783839.0**

(22) Date of filing: **26.03.2021**

(51) International Patent Classification (IPC):
**B01D 39/14** (1968.09)      **B01D 39/18** (1968.09)
**A62B 18/04** (1968.09)      **A62B 7/10** (1968.09)
**A62B 23/02** (1968.09)

(52) Cooperative Patent Classification (CPC):
**A62B 7/10; A62B 18/04; A62B 23/02; B01D 39/14;
B01D 39/16; B01D 39/18**

(86) International application number:
**PCT/RU2021/000130**

(87) International publication number:
**WO 2021/206586 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.04.2020 RU 2020112991**

(71) Applicant: **Electrophor, Inc.
Woodmere, NY 11598 (US)**

(72) Inventors:
• **SHMIDT, Joseph L.
Woodmere, NY 11598 (US)**

• **MITILINEOS, Aleksandr Gennadievich
Saint-Petersburg, 195220 (RU)**
• **KAZAKEVICH, Yuriy Evgenievich
Saint-Petersburg, 198261 (RU)**
• **VASIL'YEVA, Evgeniya Sergeyevna
Saint-Petersburg, 192236 (RU)**
• **RUSINOV, Gleb Dmitrievich
Saint-Petersburg, 198302 (RU)**
• **CHERNYI, Alexander Alexandrovich
Saint-Petersburg, 195252 (RU)**
• **VILKOVA, Anastasia Nikolaevna
Gatchina, 188310 (RU)**
• **FROLOVA, Maria Anatol'evna
Saint-Petersburg, 198095 (RU)**

(74) Representative: **Danubia Patent & Law Office LLC
Bajcsy-Zsilinszky út 16
1051 Budapest (HU)**

(54) **FILTER MATERIAL AND PERSONAL PROTECTIVE MEANS BASED THEREON**

(57)     A group of inventions relates to multilayer filtration materials for liquid or gas purification, which can be used purification systems for liquids, for example water from various sources, including drinking water, in ventilation systems or air filtration or for personnel or collective protective equipment production, including respiratory protective equipment, produced based on filtration materials.

A filtration material for liquid or gas purification, consisting of at least two layers, through which the liquid or gas flows one by one, wherein the first layer is a coarse filtration layer made on the basis of a nonwoven fibrous material, and the second layer is a fine filtration layer made on the basis of filtration paper and/or filtration cardboard. The filtration material is configured to sorption filtration of liquid or gas, the coarse filtration layer contains particles with a size of 2 to 500 microns, predominantly of 5 to 200 microns, of at least one type of sorbent, retained in the structure of the nonwoven fibrous material predominantly due to mechanical forces, and the second fine filtration layer contains particles with a size of 0.05 to 20 microns, predominantly of 0.2 to 5 microns of at least one fine-dispersed sorbent, retained in the structure of the filtration paper and/or filtration cardboard predominantly due to adhesive forces.

A personal protective equipment made as a helmet, consisting of a body made of predominantly a transparent polymeric material with air inlet and outlet openings, a collar made of elastic polymeric material. The personal protective equipment contains at least one air circulation means, wherein the air inlet and outlet openings are equipped with filters made of the inventive filtration material, wherein the inlet filter is directed to the environment by the first coarse filtration layer of the filtration material, and the outlet filter - by the second fine layer of the filtration material.

EP 4 134 148 A1

Figure 1

**Description**

A group of inventions relates to multilayer filtration materials for liquid or gas purification, which can be used in purification systems for liquids, for example water from various sources, including drinking water, in ventilation systems or air filtration or for personal or collective protective equipment production, including respiratory protective equipment, produced based on filtration materials.

Filtration materials for purification of different liquids, for example, water or oil and/or gases, for example, air and personal protective equipment based on them are known from the state of the art. Main requirements to filtration materials are high efficiency (material must absorb maximum impurities) and long-term service. Filtration material with long-term service, but low efficiency and on the contrary, short-term service, but with high efficiency are known from the state of the art.

Multilayer liquid filtration material of the patent US 3780872 (applicant Pall Corp, priority 27.05.1968, IPC B01D 27/06) is known from the state of the art. Material of a patent US 3780872 is canvas of several layers, where every layer is made of range of fibers interlaced between each other. Fiber of every following layer in the canvas interlocks the fiber of the previous layer. Two types of texture are claimed in the patent - with overlap and folding, which is stronger than overlap in four times. To produce such material layers with different weaving are put against each other, and then are put under press bar and the layers are shifted against each other. As the layers are porous, the channels inside them are shifted too, forming tortuous path for liquid. But at the same time the inner size of the channels decreases and becomes approximately 50 microns. Wire made of metals resistant to corrosion and inert for filtrated media can be used for fiber production.

Within the scope of the invention, material works as follows: liquid to be filtered passes the material layer by layer and is purified from mechanical debris, the size of which is bigger than pores in the layers. The drawback of the material of a patent US 3780872 is high production costs (as metal fibers are used) along with low filtration efficiency (material eliminates only relatively big mechanical debris but does not delete absorbed debris). Also, such layers cannot be filled with sorbents as soon as structure is damaged under pressure, and as metal fiber is inert, sorbent cannot fix on fibers, and it will be washed away during filtration.

Filtration material for air purification of a patent US 7691168 (applicant 3M Innovative Properties Company, priority 10.10.2006, IPC B01D 24/00, D01D 5/20, H05H 1/26, A62B 7/10, B03C 3/00) is known from the state of the art. Filtration material consists of two layers - hydrocharged fibrous filtration layer, capable to abrsorb particles up to several microns size and porous roll-to-roll processable support layer. Hydrocharged fibrous filtration layer consists of interlaced fibers with size from 12 to 300 microns, from 25 to 200 microns, from 50 to 150 microns, which are preliminary put into polar liquid, for example water, alcohols, ketones, or their mixtures and then are dried under conditions for fiber surface charge. Within the scope of claimed invention filtration material works as follows: the air passes the support layer, which mechanically eliminates large particles and after that, air passes through fibrous filtration layer, which mechanically and due to electrostatic forces eliminates small particles from air. Filtration material of a patent US 7691168 may be used for respiratory protective equipment production for example, in respirators. Filtration material of a patent US 7691168 has a drawback. Charged surface within time can lose its power and filtration material will lose its efficiency. Also, this material is not effective towards small particles, which have no surface charge. So, the main drawback of this material is its low efficiency.

Filtration material Ahlstrom Disruptor 5283 (produced by Ahlstrom-Munksjo, Sweden, https://www.wasser-primus.com/wp-content/uploads/Grayl-Filtration-Alstrom-Disruptor-Presentation-2011-1.pdf), is known from the state of the art and is chosen as the closest analogue. This filtration material consists of macrofibers, for example glass, covered with boehmite (aluminium oxohydroxide), which are added to composition of fibrous material during non-woven fabric production. Produced material is laid between spunbond layers to increase strength. The length of macofibers covered with boehmite varies from 2 to 250 nm. Crystal structure of boehmite creates electrokinetic potential on fiber's surface. Material Ahlstrom Disruptor 5283 has multilayered pore structure. Within the scope of invention, such material works as follows: liquid to be filtered flows through the material layer and is purified from impurities. The main drawback of the material is that efficiency of it relates to electrokinetic potential on the fibers surface, during sorption of debris the potential changes, the material stops to absorb impurities, so it has short service time.

Filtration material of a patent US 4976858 (applicant Toyo Roki Kabushiki Kaisha, priority 01.02.1990, IPC B01D39/14), is known from the state of the art and chosen as the closest analogue. Filtration material of a patent US 4976858 consists of at least two layers fused to each other. Liquid or gas flows layers of different density layer by layer. The first layer is coarse filter and is made of nonwoven fibrous fabric and is denser, then the second. The second layer is made of filtration paper and is a fine filter. Additional layers of different density may lay between two main layers. Filtration material is intended for mechanical liquid filtration and within the scope of the claims works as follows: filtered liquid flows layer by layer, large particles are mechanically absorbed in the first layer, and fine particles are absorbed in the second layer. Filtration material of the patent US 4976858 has the essential drawback, as purifies liquid only mechanically, but it can't absorb dissolved impurities. Also, layers of such material cannot be filled with any sorbents as sorbent may be fixed in the layers only due to mechanical forces (surface roughness of sorbent and layers). During filtration sorbent may be washed of by the liquid flow. So, the main drawback of this material is its low efficiency.

Personal protective equipment of a patent EP 2376168 (applicant Intersurgical S.P.A., priority 03.12.2008, IPC A61M 16/06, A 62B 17/04) is known from the state of the art. Personal protective equipment is made in the form of helmet, consisting of body predominantly of transparent polymeric material with openings for air inlet and outlet, collar of elastic polymeric material and firm collar - support. Air inlet may be connected to stationary or portable oxygen source, and that is the drawback of the given personal protective equipment as significantly narrows the area of its use.

Personal protective equipment of utility model patent RU65385 (applicant ZAO "Northwest scientific-technical center "A.A. Gunayev Portable personal protective equipment", priority 28.03.2007, IPC A62B 15/00, A62B 17/04). Personal protective equipment is a helmet, consisting of the body, predominantly made of transparent polymeric material and skirt (sealing cup), sealingly connected by its upper edge to the edge of helmets neck. There is an opening in the skirt for exhalation valve. This skirt may be made of fibrous polymeric filtration material or of fibrous polymeric filtration material of Petraynov filter, filled with powdered sorbents, and of ion-exchange fibrous filtration or of activated carbon fibrous material with sorbing properties. Optionally personal protective equipment maybe equipped with protective half-mask of sorbing and filtration material, attached to the skirt with exhalating valve. Within the scope of the invention indicated personal protective equipment works as follows. When the user breathes in the exhalating valve is closed and exhaustion occurs in the space under protective hood. Due to exhaustion under the skirt contaminated air flows through skirts of filtration material. Air purifies only from aerosols or from aerosols, gases, and vapors, and flows into the space under the skirt. Due to exhaustion under half-mask, air predominantly purified by material of the skirt, flows through filtration material of the half-mask, additionally purifies, and then flows to the user. When user breathes out due to excessive pressure in the space under half-mask exhalation valve opens and the air breathed out flows out personal protective equipment of utility model patent RU65385 has the following drawbacks. First one is that during filtration process moisture drops, containing microorganisms are mechanically retained by filtration material and then microorganisms exist and may develop in the material, in this case, personal protective equipment becomes potential source of infection. Secondly, filtration material has short service time, so filter elements must be changed more often. Also, the other drawback is that air breathed out flows into the environment without any filtration, so the user himself may be the source of infection.

Personal protective equipment of a patent US 4620538 (applicant The United States of America as represented by Secretary of Air Force, priority 19.03.1985, IPC A61H 31/00) and chosen by the applicant as the closest analogue is known from the state of the art. Personal protective equipment of a patent US 4620538 is made as a helmet, consisting of the body made predominantly of transparent polymeric material with openings for oxygen inlet and air outlet, elastic inflating collar and two adjusting rings. The air outlet is equipped with non-return valve, which preserves inner space of the helmet from the ambient air. Within the scope of the invention indicated personal protective equipment works as follows: the user puts on the helmet, adjusts the size of inflating to make it airtight to the neck. When user breathes in, oxygen flows into the helmet though inlet opening, and the air breathed out flows out of inner space of the helmet into the environment. Main drawbacks of the given invention are the absence of filtration materials in the equipment and the obligatory oxygen source. Also, the given embodiment does not filtrate the breathed-out air before it flows into environment.

Object of the invention and the technical result are achieved by developing of new filtration material for liquid or gas purification with high efficiency to impurities filtration and with long service life and personal protective equipment on its bases, which protects the user from the environment and on the contrary.

Problem to be solved and technical result to be achieved by a filtration material for liquid or gas purification, consisting of at least two layers, through which the liquid or gas flows one by one, wherein the first layer is a coarse filtration layer made on the basis of a nonwoven fibrous material, and the second layer is a fine filtration layer made on the basis of filtration paper and/or filtration cardboard, characterized in that the filtration material is configured to sorption filtration of liquid or gas, the coarse filtration layer contains particles with a size of 2 to 500 microns, predominantly from 5 to 200 microns, of at least one type of sorbent, retained in the structure of the nonwoven fibrous material predominantly due to mechanical forces, and the second fine filtration layer contains particles with a size of 0.05 to 20 microns, predominantly from 0.2 to 5 microns of at least one fine-dispersed sorbent, retained in the structure of the filtration paper and/or filtration cardboard predominantly due to adhesive forces. Therein, for example, but not limited to, activated carbons, activated carbon fibers, fibrous ion exchange materials, for example on the base of polyacrylonitrile, subsoil resources carbons, silica gels, alumina gels, alumina silicates, diatomite, ion exchange resins, chitin, chitosanase, sorbents on the base of metal oxides and hydroxides mixtures of indicated sorbents can be used as the first coarse layer, and for example, but not limited to, activated carbons, activated carbon fibers, fibrous ion exchange materials, for example on the base of polyacrylonitrile, subsoil resources carbons, silica gels, alumina gels, alumina silicates, diatomite, sorbents on the base of metal oxides and hydroxides mixtures of indicated sorbents can be used as the second fine filtration layer. Also, filtration paper and/or carboard of the second fine filtration layer is a composite, containing predominantly up to 50% of fibers on the base of cellulose and may additionally contain up to 30% of selective fibrous ion exchange material and from 0.001 to 2%, predominantly from 0.004 to 0.1%, flocculant, which may be neutral, cationic, anionic or cationic-anionic, for example, but not limited to, polyvinyl alcohol, polyoxythelens, polyacrilimides, polyacrylates, polymetacrylates, partly partially hydrolyzed polyacrylamide. Therein the second fine filtration layer has an increased sorption ability to retain powdered sorbent particles, washed or blown off from the first layer during filtration. The surface of the first coarse filtration layer is rougher, than the surface of the second fine filtration layer, therein the liquid predominantly evenly spreads when flowing out from the first coarse layer and coming into the second fine filtration layer. Also, at least one of the layers may be corrugated, and the material itself may additionally contain one or more filtration layers before and after the first or the second filtration layers, and be made of, for example, but not limited, spun bond, carbon nonwoven fiber, meshy polymeric material, for example, dividing porous polymeric mesh or fibrillated porous film, graphene film. Also a problem to be solved and technical result to be achieved by that, the filtration material for liquid or gas purification may be used to produce personal protective equipment, including, but not limited to respiratory masks of different configurations, and personal protective equipment based thereon, which is made as a helmet, consisting of a body made of a predominantly transparent polymeric material with air inlet and outlet openings, a collar made of elastic polymeric material, the personal protective equipment contains at least one air circulation means, wherein the air inlet and outlet openings are equipped with filters made of the claimed filtration material, wherein in the inlet filter is directed to the environment by the first coarse filtration layer of the filtration matedrial, and the outlet filter - by the second fine layer of the filtration material. The air circulation means is made as, for example, but not limited to, a compressor, a pump or a ventilator. Also, the personal protective equipment may additionally contain a membrane valve, configured to consume water and spoon-food without taking off the personal protective equipment, wherein the collar made of elastic polymeric material is configured to adjust its size by means of air supplied into an inner cavity of the collar.

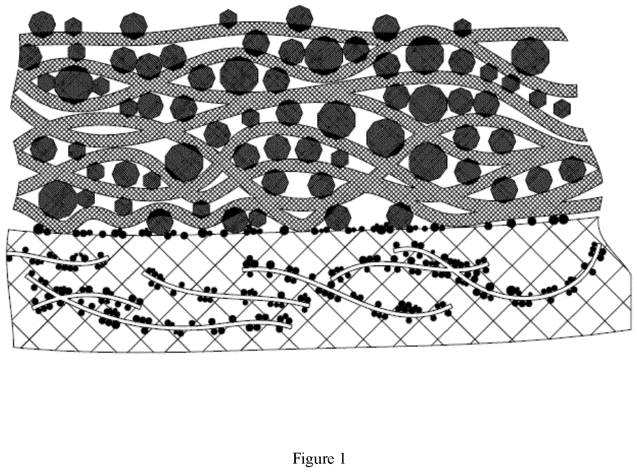

Disclosure of the group of the inventions is illustrated by the figures:
The schematic image of the filtration material structure is given on the figure 1.

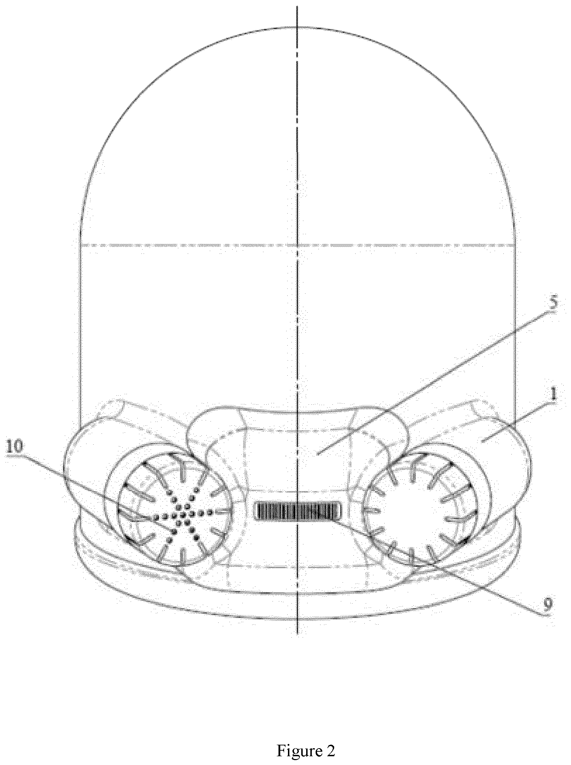

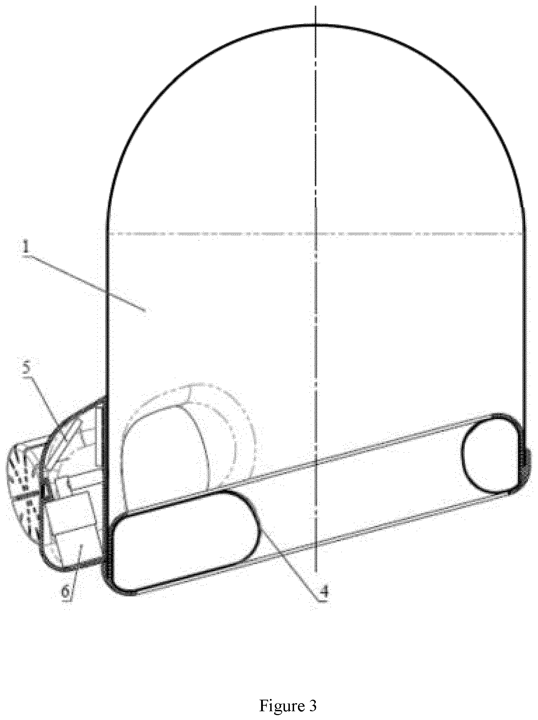

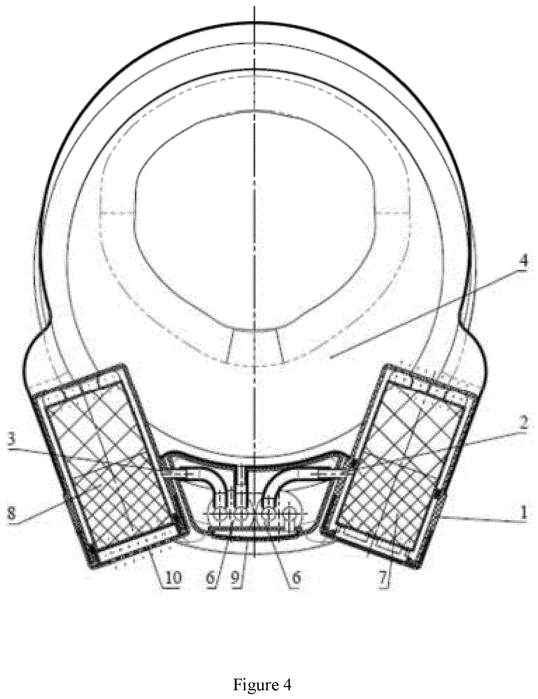

An example of the personal protective equipment appearance from different angels is given on the figures 2-4.

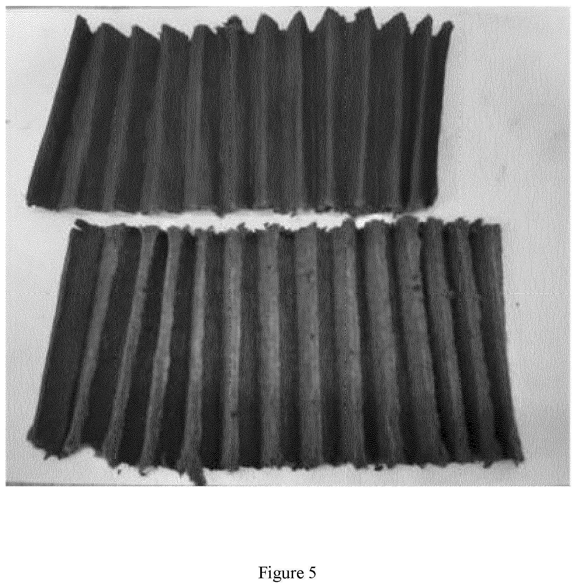

The photo of coarse and fine layers of the filtration material appearance after ferrum colloid filtration trails are given on the figure 5.

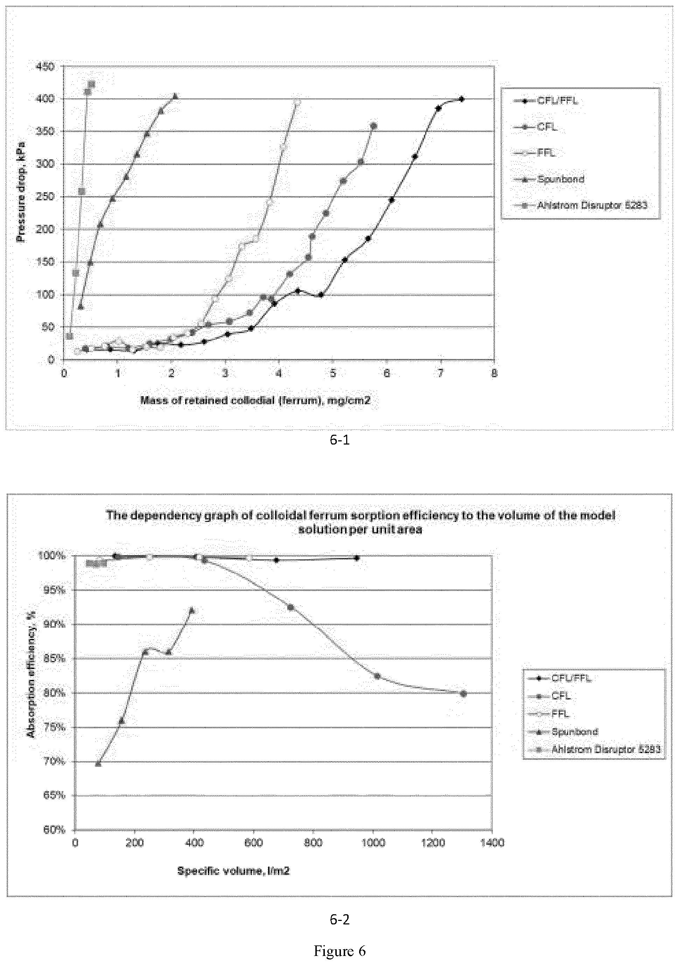

Experimental data, where 6-1 - the diagram of pressure difference from colloid ferrum absorbed mass per unit area; 6-2 - the diagram of ferrum colloid absorption effectiveness from the volume of model solution per unit area of material are given on the figure 6 (6-1, 6-2).

Filtration material for liquid or gas purification consists predominantly of two obligatory layers, which filtrated liquid or gas flow consequently. Therein at least one of the layers may be corrugated.

First layer - coarse layer - is made on the base of nonwoven fibrous material for example from the hydrophobic polyolefin fibers with fiber diameter from 5 to 30 microns and is filled with particles with size from 2 to 500 microns, predominantly from 5 to 200 microns, of at least one type of sorbent. Material of the first layer is aerodynamic-laid web from fibers, produced by extruding the polymer melt through the nozzle into the transporting gas flow with simultaneous supply of granulated or powdered sorbent. Therein the particles of the sorbent not only engage to the fibers surface, but due to high temperature melt with the fibers and so mechanically attach to them. Activated carbons, activated carbon fibers, fibrous ion exchange materials, for example on the base of polyacrylonitrile, subsoil resources carbons, silica gels, alumina gels, alumina silicates, diatomite, ion exchange resins, chitin, chitosanase, sorbents on the base of metal oxides and hydroxides mixtures of indicated sorbents may be used, but not limited to, as sorbents of the first coarse layer. Indicated sorbents may be additionally manufactured with bactericidal agent, for example, but not limited to, for example, silver containing agent.

Second layer - fine filtration layer - is a composite material up to 50% consisting of cellulose fibers with fiber length from 0.5 to 3 mm, diameter from 5 to 30 microns, predominantly from 5 to 25 microns, selective fibrous sorbent (not more than 30% of overall mass), ultradisperse particles of the sorbent with the size from 1 to 25 microns, predominantly from 2 to 20 microns, and also flocculant in amount from 0.001 to 2%, predominantly from 0.004 to 0.1 %. Activated carbons, activated carbon fibers, fibrous ion exchange materials, for example on the base of polyacrylonitrile, subsoil resources carbons, silica gels, alumina gels, alumina silicates, diatomite, sorbents on the base of metal oxides and hydroxides mixtures of indicated sorbents can be used as ultradisperse particles for the second fine filtration layer. Indicated sorbents may be additionally manufactured with bactericidal agent, for example, but not limited to, for example, silver containing agent. Flocullant may be neutral, cationic, anionic, or cationic-anionic, for example, but not limited to, polyvinyl alcohol, polyoxythelens, polyacrilimides, polyacrylates, polymetacrylates, partly partially hydrolized polyacrylamide. Due to that the material of the second layer consists mostly of cellulose fibers, it is produced by handsheet with further drying and pressure molding. Ultradisperse particles attach to the fibers mostly due to adhesion forces. Besides the second fine filtration layer has an increased sorption ability to retain powdered sorbent particles, washed off or blown from the first layer during filtration.

Produced filtration material has hydrophobic-hydrophilic properties. These properties mostly are arranged by the fibers of different type. Hydrophobic fibers are prevailed in the first layer, hydrophilic - in the second. Hydrophobic-hydrophilic properties of the sorbent provide increased efficiency during hydrophobic-hydrophilic impurities, for example viruses. Therein the claimed material is bacteriostatic.

First layer has rougher surface, than the second. Unevenness is the ratio between fibers diameter and size of sorbent particles. First filtration layer contains the fibers with diameter from 5 to 30 microns and particles size from 2 to 500 microns, predominantly from 5 to 200 microns. Second filtration layer contains the fibers with diameter from 5 to 30 microns and particles size from 1 to 25 microns, predominantly from 2 to 20 microns. So, the unevenness of the surface of the first layer is at least by one order more than unevenness of thew second layer.

This provides dispersion of liquid flow after it comes from the first layer before it enters the second layer, so that if even the part of the pores of the first layer is clogged with large mechanical particles, the second layer totally takes part in filtration process. If the material of the first layer is blocked with particles, all the channels of the second layer remain opened for liquid and gas flow. So, during filtration totally or partly acts the volume of the first layer and all the volume of the second layer of the filtration material, increasing velocity and purification rate.

Besides the indicated layers the filtration material may additionally contain one or more filtration layers before and after the first or the second filtration layers, and be made of, for example, but not limited, spunbond, carbon nonwoven fiber, meshy polymeric material, for example, dividing porous polymeric mesh or fibrillated porous film, graphene film.

Within the characteristic features claimed filtration material acts as follows. Liquid or gas to be filtrated flows into the first layer, where the first filtration step takes place. As the average particle size of the first layer sorbent is predominantly bigger than the average diameter of fibers of the first layer, the first layer has extended surface (big number of pores) and has high contaminant capacity and ability to absorb the impurities slowly. After the first layer, liquid or gas to be filtrated flow into the second layer, therein when the liquid is purified, after the first layer liquid uniformly spreads when flowing to the second layer. The second filtration step takes place in the second filtration layer. The second layer has an extended surface (big number of pores) either and simultaneously sorbent particles of the second layer have high kinetic ability to absorb dissolved impurities. Besides, if powdered B particles of the sorbent of the first layer are washed or blown off, the second layer blocks them. Purified liquid or gas goes to the user after the second purification layer.

The described mechanism of the filtration material operation is also confirmed by experimental data. The photo of coarse and fine layers of the filtration material appearance after ferrum colloid filtration trails are given on the figure 5. Filtration material after the trails was divided into the layers, each of them was photographed, therein on the photo (Figure 5) the coarse filtration layer is above the second fine filtration layer. It is seen (Figure 5) that most of the ferrum hydroxide particles were absorbed by the first coarse layer and the smallest particles, which came through the first layer were retained in the second layer.

Compared to the closest analog it is an advantage that the second layer can absorb powdered particles washed off from the first layer. In the closest analog sorbent retention is due to mechanical forces, so the sorbent will be washed off and that will decrease the efficiency of the material, and worse the usability, as purified liquid or gas will contain the sorbent particles. The sorbent particles, left in the purified gas limits the material use in the personal protective equipment, so the claimed material is the new one, but not the combination of analog and other sorbents from the state of the art.

Efficiency of the claimed filtration material of liquid filtration is confirmed by comparative trails of colloidal ferrum absorption in the experimental cartridges of 100 mm high, made as radial filtration cartridge with typical carbon block in the center and corrugated wrap made of different filtration materials, specifically: spun bond with surface density 100 g/m$^2$ (polypropylene, manufacturer OOO "Konglomerat" LLC, Russia) (the indicated material was chosen from the state of the art and widely spread on the market of filtration materials with long service life) material of Ahlstrom Disruptor 5283 (manufacturer Ahlstrom-Munksjo, Sweden) (the indicated material was chosen from the state of the art and widely spread on the market of filtration materials with high purification efficiency), first coarse layer and second fine layer apart, the claimed composite flirtation material. The results of trails are given in the table 1.

As the filtration material of a patent US 4976858 is not available on the market, to confirm the technical result, the claimed filtration material was compared to the materials with long service life and high purification efficiency known from the state of the art.

Table 1

| Corrugated wrapping makeup | Minimum absorption efficiency, % | Mass of retained colloid (in terms of iron), mg/cm$^2$ | |
| --- | --- | --- | --- |
| | | At a pressure drop of 200 kPa | At a pressure drop of 300 kPa |
| Spun bond | 70 | 0.7 | 1.3 |
| Ahlstrom Disruptor 5283 | 98.7 | 0.3 | 0.4 |

(continued)

| Corrugated wrapping makeup | Minimum absorption efficiency, % | Mass of retained colloid (in terms of iron), mg/cm$^2$ | |
| --- | --- | --- | --- |
| | | At a pressure drop of 200 kPa | At a pressure drop of 300 kPa |
| Coarse filtration layer (further - CFL) | 80 | 4.8 | 5.5 |
| Fine filtration layer (further - FFL) | 99.3 | 3.6 | 4.0 |
| Composite material: CFL / (FFL) | 99.4 | 5.8 | 6.5 |

The trails were held on the bench tester with automatic supply of the model solution of colloidal ferrum hydroxide, concentration 60 ± 10 mg/dm$^3$ (in conversion to ferrum) and constant volume flowrate 1000 sm$^3$/min.

During trails pressure drop (to 400 kPa) and absorption efficiency of colloidal ferrum where indicated. The total amount of ferrum was measured by spectrophotometric method.

To compare the buildup of pressure drops for different materials of different geometry, the conversion into the volume units per unit area of the material was made.

The sorption of colloidal ferrum efficiency was made according to formula:

$$E,\% = \frac{(Cinitial - Cfiltrated)}{Cinitial} \cdot 100\%,$$

where E,% - sorption of colloidal ferrum efficiency, %; Cinitial - model ferrum colloidal solution concentration; Cfiltrated - the ferrum concentration in solution after purification.

The results are given in the Table 1 and on the figure 6, where 6-1 - is the dependency graph of mass of colloidal ferrum per unit area, 6-2 - is the dependency graph of colloidal ferrum sorption efficiency to the volume of the model solution per unit area.

Comparison trails showed that filtration material, consisting of layer by layer of coarse and fine filtration materials has both high absorption efficiency and low flow resistance in comparison to traditional prefiltration material or layers themselves. Low flow resistance of liquid means that, filtration material clogs slowly, and so has long service life. So, claimed material has high absorption efficiency and long service life, so the experimental data confirm the technical result.

As it was said before, claimed filtration material may be used in personal protective equipment.

Personal protective equipment (figures 2 - 4) is made as a helmet and consists of a body (1) from predominantly transparent polymeric material with air inlet (2) and outlet (3), collar (4) from elastic polymeric material, and one air circulation means (6). Also, personal protective equipment may comprise electric power supply unit (not shown) and control panel (5). Air inlet (2) and outlet (3) openings are equipped with filters (7, 8) made of claimed filtration material. Therein in the inlet filter (7) coarse filtration layer goes first to the environment, and the outlet filter (8) - second fine layer of the filtration material.

Air circulation means (6) is made as, for example, but not limited to, as compressor, pump or ventilator.

The size of the collar is regulated by means of air supply into the inner cavity of the collar (4).

Respiratory protective equipment works as follows. The user draws on the equipment and pumps the collar (4) to the required size and fixates the equipment airtight around the neck. When the equipment is turned on, the air circulation means (6) starts to supply air through inlet filter (7). Filtration material works as follows. Air flows through consequently first and then the second layers of the material, filtrating from mechanical and other impurities. When the user breathes in/out the air, which is aerosol, its particles get into the material and due to its hydrophobic-hydrophilic properties are retained there. The moisture is dried due to air circulating means (6) operation, and impurities remain on the sorbent's granules surface. Due to the indicated properties of the filtration material, liquid or gas purification is done mire quick and effective, then in the material of the closest analogue. During the operation of the equipment the used air flows out from outlet opening (3), equipped with the outlet filter (8) into the environment.

The advantage of the proposed personal protective equipment is that the filter material is highly efficient and can absorb viruses, among other things. As mentioned earlier, the inventive filter material is preferably bacteriostatic, which means that the risk of microorganisms and viruses developing on the surface of the filter material is reduced, thus, personal protective equipment based on the specified filter material is safe to maintain (there is no danger of bacteriological contamination when replacing the filter material in personal protective equipment).

Since the claimed protective equipment has both an inlet and an outlet filter, and the air circulation means provides an unambiguous movement of flows, the air exhaled by the user necessarily passes through the outlet filter, that is, the personal protective equipment protects not only the user from the environment, but also the environment from the user, thus ensuring the achievement of a technical result.

The description of the present invention presents a preferred embodiment of the invention. It can be changed within the claimed set of the claims, so the wide use of the invention is possible.

## Claims

1. A filtration material for liquid or gas purification, consisting of at least two layers, through which the liquid or gas flows one by one, wherein the first layer is a coarse filtration layer made on the basis of a nonwoven fibrous material, and the second layer is a fine filtration layer made on the basis of filtration paper and/or filtration cardboard, **characterized in that** the filtration material is configured to sorption filtration of liquid or gas, the coarse filtration layer contains particles with a size of 2 to 500 microns, predominantly of 5 to 200 microns, of at least one type of sorbent, retained in the structure of the nonwoven fibrous material predominantly due to mechanical forces, and the second fine filtration layer contains particles with a size of 0.05 to 20 microns, predominantly of 0.2 to 5 microns, of at least one fine-dispersed sorbent, retained in the structure of the filtration paper and/or filtration cardboard predominantly due to adhesive forces.

2. The filtration material for liquid and gas purification according to claim 1, **characterized in that** as the first coarse filtration layer, for example, but not limited to, can be used activated carbons, activated carbon fibers, fibrous ion exchange materials, for example, based on polyacrylonitrile, subsoil resources carbons, silica gels, alumina gels, alumina silicates, diatomite, ion exchange resins, chitin, chitosanase, sorbents based on metal oxides and hydroxides or mixtures of the indicated sorbents.

3. The filtration material for liquid and gas purification according to claim 1, **characterized in that**, as the second fine filtration layer, for example, but not limited to, can be used activated carbons, activated carbon fibers, fibrous ion exchange materials, for example, based on polyacrylonitrile, subsoil resources carbons, silica gels, alumina gels, alumina silicates, diatomite, sorbents based on metal oxides and hydroxides or mixtures of the indicated sorbents.

4. The filtration material for liquid and gas purification according to claim 1, **characterized in that** the filtration paper and/or carboard of the second fine filtration layer is a composite, containing predominantly up to 50% of cellulose-based fibers.

5. The filtration material for liquid and gas purification according to claim 1, **characterized in that** the filtration paper and/or carboard of the second fine filtration layer may additionally contain up to 30% of selective fibrous ion exchange material.

6. The filtration material for liquid and gas purification according to claim 1, **characterized in that** the filtration paper and/or carboard of the second fine filtration layer may additionally contain from 0.001 to 2%, predominantly from 0.004 to 0.1% of a flocculant.

7. The filtration material for liquid and gas purification according to claim 6, **characterized in that** the flocculant may be neutral, cationic, anionic, or cationic-anionic, for example, but not limited to, polyvinyl alcohol, polyoxyethylens, polyacrilamides, polyacrylates, polymetacrylates, partially hydrolyzed polyacrylamides.

8. The filtration material for liquid and gas purification according to claim 1, **characterized in that** the second fine filtration layer has an increased sorption ability to retain powdered sorbent particles washed off or blown from the first layer during filtration.

9. The filtration material for liquid and gas purification according to claim 1, **characterized in that** the surface of the first coarse filtration layer is rougher than the surface of the second fine filtration layer, thereby the liquid predominantly evenly spreads when flows out from the first coarse layer and enters the second fine filtration layer.

10. The filtration material for liquid and gas purification according to claim 1, **characterized in that** at least one of the layers may be corrugated.

11. The filtration material for liquid and gas purification according to claim 1, **characterized in that** the filtration material may additionally contain one or more filtration layers located before or after the first filtration layer, or after the second filtration layer, made of, for example, but not limited, spunbond, carbon nonwoven fiber, meshy polymeric material, for example, dividing porous polymeric mesh or fibrillated porous film, graphene mesh.

12. The filtration material for liquid and gas purification according to claim 1, **characterized in that** the filtration material may be used to produce personal protective equipment, including, but not limited to, respiratory masks of different configurations.

13. A personal protective equipment made as a helmet, consisting of a body made of a predominantly transparent polymeric material with air inlet and outlet openings, a collar made of elastic polymeric material, **characterized in that** the equipment contains at least one air circulation means, wherein the air inlet and outlet openings are equipped with filters made of the filtration material of claim 1, wherein the inlet filter is directed to the environment by the first coarse filtration layer of the filtration material, and the outlet filter - by the second fine layer of the filtration material.

14. The personal protective equipment according to claim 13, **characterized in that** the air circulation means is made as, for example, but not limited to, a compressor, a pump or a ventilator.

15. The personal protective equipment according to claim 13, **characterized in that** the equipment may additionally contain a membrane valve configured to consume water and spoon-food without taking off the personal protective equipment.

16. The personal protective equipment according to claim 13, **characterized in that** the collar made of elastic polymeric material is configured to adjust its size by means of air supplied into an inner cavity of the collar.

Figure 1

Figure 2

Figure 3

Figure 4

Figure 5

6-1

6-2

Figure 6

## INTERNATIONAL SEARCH REPORT

| International application No. |
|---|
| PCT/RU 2021/000130 |

**A.  CLASSIFICATION OF SUBJECT MATTER**

(see supplemental sheet)

According to International Patent Classification (IPC) or to both national classification and IPC

**B.  FIELDS SEARCHED**

Minimum documentation searched (classification system followed by classification symbols)

A62B 7/00, 18//04, B01D 24/00, 39/00, 39/08, 0039/16, 39/12, 39/14, 39/18,  B07B 1/46, F02M 35/024, A62B 23/02

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE

**C.  DOCUMENTS CONSIDERED TO BE RELEVANT**

| Category* | Citation of document, with indication, where appropriate, of the relevant passages | Relevant to claim No. |
|---|---|---|
| Y | RU 2704211 C1 (3M INNOVEITIV PROPERTIZ KOMPANI) 24.10.2019, p. 4, p. 7, p. 31-35, p. 9, p. 35-37, p. 10, p. 11-15, p. 11, p. 23-24, p. 12, p. 27-44, fig.1, the claims | 1-12 |
| Y | RU 2185877 C2 (KONSTANTINOV ALEKSANDR PAVLOVICH) 27.07.2002, p.4, p. 36-44, p. 5, p. 7-8, 17-20, p. 6, p. 44-47, p. 7, p. 40-43, the claims | 1-12 |
| Y | US 8556089 B2 (DONALDSON COMPANY, INC.) 15.10.2013, col. 4, p. 1-2, col. 6, p. 29-35, col.16, p. 39-49, col. 17, p. 20-27, col. 17, p. 40-41 | 1-12 |
| Y | BY 11680 C1 (GOSUDARSTVENNOE NAUCHNOE UCHREZHDENIE "INSTITUT FIZIKO-ORGANICHESKOY KHIMII NATSIONALNOY AKADEMII NAUK BELARUSI") 28.02.2009, examples 1-2 | 5 |
| Y | JP 60225619 A (OSHITARI YOSHIMI) 09.11.1985, [0007], [OOP], the abstract | 6-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June 2021 (07.06.2021) | 10 June 2021 (10.06.2021) |

| Name and mailing address of the ISA/ RU | Authorized officer |
|---|---|
| Facsimile No. | Telephone No. |

Form PCT/ISA/210 (second sheet) (April 2005)

## INTERNATIONAL SEARCH REPORT

| | International application No. |
|---|---|
| | PCT/RU 2021/000130 |

C (Continuation).     DOCUMENTS CONSIDERED TO BE RELEVANT

| Category* | Citation of document, with indication, where appropriate, of the relevant passages | Relevant to claim No. |
|---|---|---|
| A | RU 2505325 C1 (OAO "KORPORATSIIA "ROSKHIMZASCHITA") 27.01.2014 | 13-16 |

Form PCT/ISA/210 (continuation of second sheet) (April 2005)

| INTERNATIONAL SEARCH REPORT | International application No. |
| --- | --- |
| | PCT/RU 2021/000130 |

A.  CLASSIFICATION OF SUBJECT MATTER

***B01D 39/14*** *(2006.01)*
***B01D 39/18*** *(2006.01)*
***A62B 18/04*** *(2006.01)*
***A62B 7/10*** *(2006.01)*
***A62B 23/02*** *(2006.01)*

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3780872 A
- US 7691168 B
- US 4976858 A
- EP 2376168 A
- RU 65385
- US 4620538 A